# FASCICULE DE BREVET EUROPEEN

(11) **EP 0 472 472 B1**
(45) Date de publication et mention de la délivrance du brevet: **15.11.1995**
(21) Numéro de dépôt: 91402294.2
(22) Date de dépôt: 22.08.1991
(51) Int. Cl.: G07C 9/00

(54) **Dispositif pour le dialogue à distance entre une station et un ou plusieurs objets portatifs**
Vorrichtung zum Ferngespräch zwischen einer Station und einem oder mehreren tragbaren Gegenständen
Arrangement for the remote dialogue between a station and one or several portable objects

(30) Priorité: 24.08.1990 FR 9010651
(43) Date de publication de la demande: 26.02.1992
(73) Titulaire: FRANCE TELECOM, 75015 Paris (FR)
(72) Inventeur: Michel, Philippe, F-14000 Caen (FR)
(74) Mandataire: Netter, André

(56) Documents cités:
- EP-A- 0 161 779
- EP-A- 0 270 274
- EP-A- 0 285 419
- FR-A- 2 623 311
- FR-A- 2 640 830
- US-A- 4 471 345
- US-A- 4 495 496

## Description

L'invention concerne l'échange d'informations à distance entre une station et un ou plusieurs objets portatifs.

Elle s'applique particulièrement mais non exclusivement à l'échange d'informations entre une carte électronique à mémoire, par exemple une "carte à puce", et un terminal.

La notion d'échange à "distance" s'oppose ici à celle d'un échange nécessitant une interface par contact, électrique ou de nature différente, entre la carte et le terminal, comme c'est le cas par exemple dans les publiphones à télécarte.

Ce type d'interface peut être considéré comme assez contraignant dans un certain nombre d'applications telles que l'identification de personnes ou le contrôle d'accès de personnes dans un bâtiment. Il peut être également contraignant dans le cas de transactions bancaires nécessitant le passage de la carte dans une fente du terminal.

Il a été décrit, dans la Demande de brevet européen No 89 403398.3 du 7 décembre 1989 (& EP-A-374018), un dispositif d'échange de données à distance entre un objet portatif et une station.

Dans ce dispositif antérieur, il est prévu, sur la station, une unité de dialogue-station propre à délimiter un domaine de portée, et, sur l'objet portatif, une unité de dialogue-objet possédant un état actif dans lequel elle est propre à coopérer mutuellement à distance avec l'unité de dialogue-station à l'intérieur dudit domaine de portée, pour effectuer l'échange d'informations.

Dans le document US-A-4 471 345, l'unité de dialogue comprend :
- des moyens de traitement-station possédant :
   * une condition primaire dans laquelle ils sont propres à
      a) générer un message d'interrogation dans ledit domaine de portée, suivi d'une zone de silence,
      b) analyser le contenu de ladite zone de silence, et
      c) en cas d'obtention du contenu identifié comme un message de réponse prédéterminé associé à un seul objet portatif, générer un message de sélection destiné audit objet portatif, et, dans le cas contraire répéter, à la fin de ladite zone de silence, les opérations a) et b), et
   * une condition de dialogue avec l'objet portatif sélectionné, et
- des moyens de commande-station propres à sélectionner les différentes conditions de moyens de traitement-station en fonction de critères de commande-station prédéterminés, la ou chaque unité de dialogue-objet comportant des moyens de traitement--objet possédant, dans ledit état actif,
   * une condition dans laquelle ils sont propres, à réception dudit message d'interrogation à
      e) générer ledit message de réponse prédéterminé associé à cet objet, et
      f) générer un message d'acquittement en cas de réception dudit message de sélection, et
   * une condition de communication transactionnelle avec l'unité de dialogue-station, ainsi que
- des moyens de commande-objet propres à faire passer les moyens de traitement-objet à la condition de communication transactionnelle.

Alors que ces dispositifs antérieurs enseignent une façon de réaliser matériellement un tel échange de données entre la station et un seul objet portatif, il convient de résoudre les problèmes qui se posent lorsque plusieurs porteurs équipés respectivement de plusieurs cartes à puce, par exemple, se présentent simultanément dans le domaine de portée de la station.

On ne connaît pas actuellement de dispositif permettant de résoudre simplement et efficacement les conflits potentiels pouvant résulter de cette présence multiple d'objets portatifs devant la station.

L'invention vise à apporter une solution à ce problème.

Un but de l'invention consiste à prendre en compte les fluctuations éventuelles des limites du domaine de portée défini par la station afin que ces limites ne perturbent pas le dialogue entre celle-ci et le ou les objets portatifs.

L'invention a encore pour but de minimiser la consommation d'énergie de l'objet portatif lorsque celui-ci se trouve en dehors du domaine de portée.

Le dispositif proposé est du type de celui évoqué ci-avant.

Selon une caractéristique générale de l'invention, dans la condition primaire les moyens de traitement-station sont propres à analyser sélectivement les contenus respectifs d'une pluralité d'intervalles temporels disjoints de ladite zone de silence,
les moyens de traitement-objet possèdent une condition d'initialisation dans laquelle ils sont propres à choisir aléatoirement l'un desdits intervalles temporels et à générer le message de réponse prédéterminé à l'intérieur de l'intervalle temporel choisi,
et les moyens de traitement-objet passent de leur condition d'initialisation à la condition de communication transactionnelle en cas d'absence de réception d'un autre message d'interrogation après la transmission du message d'acquittement.

L'invention a également pour objet un objet portatif, comprenant une unité de dialogue-objet possédant un état actif dans lequel elle est propre à coopérer à distance avec une station à l'intérieur d'un domaine de portée délimité par ladite station, pour effectuer un échange d'informations avec ladite station, l'unité de dialogue-objet comportant :
- des moyens de traitement-objet possédant, dans ledit état actif,
   * une condition dans laquelle, à réception d'un message d'interrogation transmis par la station et suivi d'une zone de silence, ils sont propres
      . à générer un message de réponse prédéterminé destiné à la station, et
      . à générer un message d'acquittement en cas de réception, postérieurement à la génération dudit message de réponse, d'un message de sélection transmis par la station, et
   * une condition de communication transactionnelle avec l'unité de dialogue-station, et
- des moyens de commande-objet propres à faire passer les moyens de traitement-objet à la condition de communication transactionnelle.

L'objet portatif est caractérisé en ce que les moyens de traitement-objet possèdent une condition d'initialisation dans laquelle ils sont propres à choisir aléatoirement l'un des intervalles temporels disjoints de ladite zone de silence et à générer le message de réponse prédéterminé à l'intérieur de l'intervalle temporel choisi,
et en ce que les moyens de traitement-objet passent de leur condition d'initialisation à la condition de communication transactionnelle en cas d'absence de réception d'un autre message d'interrogation après la transmission du message d'acquittement.

L'invention a enfin pour objet une station appartenant au dispositif d'échange d'informations ayant les caractéristiques évoquées ci-avant.

D'autres avantages et caractéristiques de l'invention apparaîtront à l'examen de la description détaillée ci-après et des dessins annexés sur lesquels :
- les figures 1, 2A et 2B sont des synoptiques schématiques d'un mode de réalisation du dispositif selon l'invention,
- la figure 3 illustre le format d'un caractère échangé entre la station et l'objet portatif,
- les figures 4 à 6 ont trait à la sélection d'un objet portatif par la station,
- les figures 7 à 10 ont trait au dialogue entre la station et cet objet portatif sélectionné, et
- les figures 11 à 13 illustrent des synoptiques relatifs à des points particuliers de fonctionnement du dispositif selon l'invention.

Les dessins comportent pour l'essentiel des éléments de caractère certain. A ce titre, ils font partie intégrante de la description et pourront non seulement servir à mieux faire comprendre la description détaillée ci-après mais aussi contribuer, le cas échéant, à la définition de l'invention.

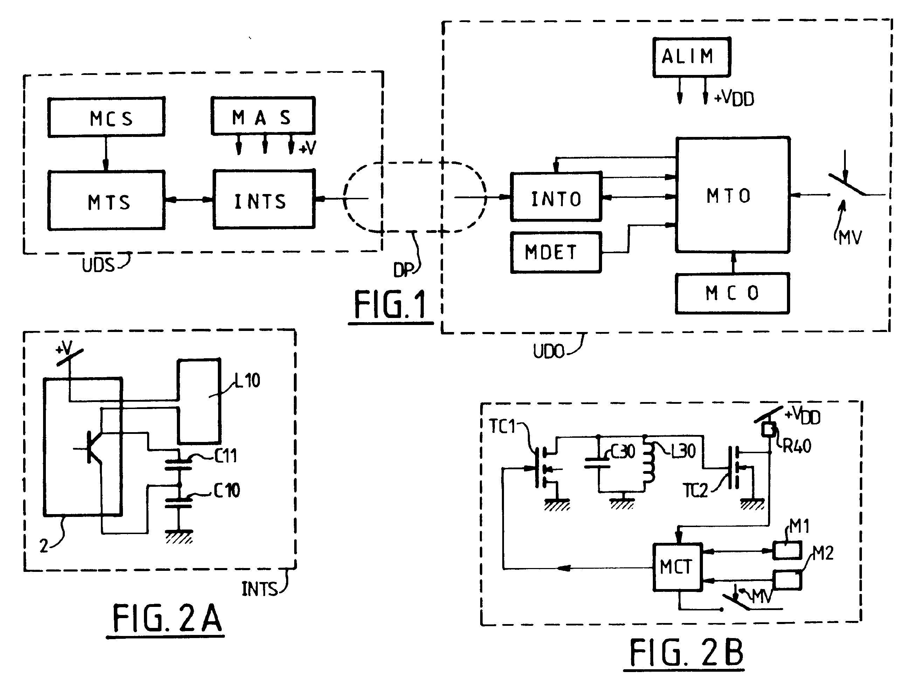

Sur la figure 1, la référence UDS désigne une unité de dialogue implantée sur la station, par exemple un terminal. Cette unité de dialogue-station comporte des moyens de traitement-station MTS commandés par des moyens de commande-station MCS (ces deux fonctions pouvant être réalisées par un processeur) et coopérant avec des moyens d'interface d'émission/réception INTS. L'unité de dialogue UDS est alimentée par des moyens d'alimentation MAS.

L'échange d'informations s'effectue à l'intérieur d'un domaine de portée DP délimité par l'unité de dialogue-station UDS.

D'une façon analogue, l'objet portatif, par exemple une carte à mémoire, est munie d'une unité de dialogue-objet UDO comportant des moyens de traitement-objet MTO, commandés par des moyens de commande-objet MCO et reliés à des moyens d'interface d'émission/réception INTO. Il est également prévu des moyens d'alimentation ALIM, tels qu'une pile, des moyens de détection des limites du domaine de portée, ainsi que des moyens de validation MV propres, comme on le verra ci-après, à être actionnés par le porteur de la carte, dans certaines applications, pour autoriser ou non l'échange d'informations entre la station et l'objet portatif.

En ce qui concerne les structures matérielles respectives des unités de dialogue-station et objet, on pourra utiliser par exemple celles décrites dans la Demande de Brevet européen No 89 403398.3 (& EP-A-374018). Néanmoins, l'invention n'est pas limitée à un tel mode de réalisation.

On rappelle ici brièvement, en se référant aux figures 2A et 2B tirées des figures 1 à 4 de la Demande de Brevet européen précitée, qu'il est prévu, dans ce cas, sur la station, un oscillateur comportant des moyens amplificateurs 2 associés à une boucle de réaction (L10, C11, C10) possédant un élément inductif-station (L10), et susceptible de lui conférer une fréquence de travail variable relativement à une fréquence de repos, tandis qu'il est prévu sur l'objet portatif un circuit électronique (C30, L30) commutable entre un état inactif et un état actif dans lequel il forme un circuit résonant accordé sur une fréquence distincte de ladite fréquence de repos, tout en demeurant apte au couplage inductif avec la boucle de réaction à ladite fréquence de repos. Les moyens de traitement-station MTS, reliés à l'oscillateur, sont capables de traiter les variations de la fréquence de travail, tandis que le circuit électronique est commuté en fonction d'informations à transmettre vers la station, la variation de la fréquence de travail de l'oscillateur, ainsi induite par ses commutations, permettant aux moyens de traitement-station d'en déduire lesdites informations.

En d'autres termes, la fréquence de travail de l'oscillateur passe de sa valeur de repos à une valeur différente et inversement selon la donnée binaire transmise depuis l'objet portatif vers la station. Les moyens de traitement-station, après avoir analysé ces variations, en déduisent l'information transmise.

L'élément inductif-station L10 est par exemple un portique, à l'intérieur duquel pourra passer le porteur de la carte.

En ce qui concerne l'unité de dialogue UDO de la carte, telle qu'illustrée sur la figure 2B, il est prévu un microcontrôleur MCT associé à une mémoire vive de travail M1 et à une mémoire morte permanente M2. Fonctionnellement, le microcontrôleur et ses mémoires font partie des moyens de traitement-objet ainsi que des moyens de commande-objet. Des commutateurs TC1 et TC2, tels que des transistors à effet de champ, complètent les moyens de commande-objet. Le circuit électronique comporte une inductance L30 connectée en parallèle avec une capacité C30. Le circuit résonant ainsi formé est susceptible d'être ou non accordé sur la fréquence de travail de l'oscillateur par l'intermédiaire du commutateur MC1 actionné par le microcontrôleur MLT. On rappelle ici que, selon la valeur de la donnée binaire à transmettre depuis la carte vers le terminal, le commutateur MC sera ouvert ou fermé.

De même, une entrée des moyens de traitement-objet, par exemple la patte d'interruption du microcontrôleur, est susceptible d'être reliée soit à la masse soit à une tension prédéterminée +VDD par l'intermédiaire d'une résistance R40, cette tension étant délivrée par les moyens d'alimentation ALIM. Le choix de cette liaison dépend du transistor à effet de champ MC2. Sa grille est reliée à la patte d'interruption du microcontrôleur tandis que le drain est relié à la borne de l'élément capacitif opposée à celle reliée à la masse, la source étant reliée à la masse et le substrat étant en l'air.

La transmission d'informations dans le sens terminal vers carte se réalise simplement par l'application ou la non-application d'une tension aux bornes de l'élément inductif L30. Pour cela, on rappelle qu'il est nécessaire que le circuit électronique L30, C30 forme un circuit résonant (en d'autres termes, le commutateur TC1 doit être fermé). Ainsi, par exemple en l'absence de tension aux bornes de l'élément L30, le transistor à effet de champ TC2 autorise l'application d'un état haut sur la patte d'interruption du microcontrôleur tandis qu'en présence d'une tension aux bornes de l'élément L30, le transistor à effet de champ relie cette patte à la masse (état bas).

Il convient de remarquer ici que le circuit électronique C30, L30, le transistor à effet de champ TC2 ainsi que la patte d'interruption du microcontrôleur forment en outre des moyens de détection des limites du domaine de portée DP, ou en d'autres termes du champ magnétique généré par la station. En effet, le circuit électronique L30, C30 formant un circuit résonant (commutateur TC1 fermé), un état bas indique la présence d'un champ magnétique tandis qu'un état haut indique l'absence d'un tel champ.

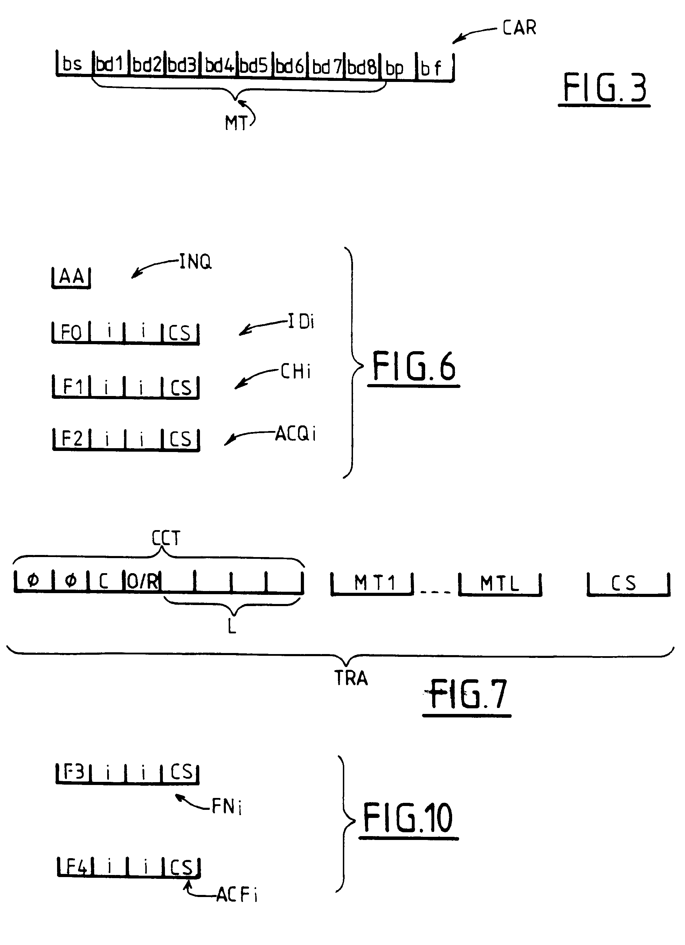

L'échange d'informations est effectué de façon asynchrone par caractères CAR (figure 3) comportant chacun un bit d'en-tête bs généralement de valeur 1, puis un mot MT ayant un nombre prédéterminé de bits de données bd1-bd8, suivi d'un bit de parité bp et d'un bit de fin bf généralement de valeur 1. Le mot MT du caractère est en principe un octet bien que l'invention ne soit pas limitée à une telle taille de mot.

Ce type de transmission permet ainsi d'utiliser l'unité centrale standard du microcontrôleur faisant partie des moyens de traitement-objet MTO. La vitesse de transmission choisie est ici de 9600 bauds.

On va maintenant décrire plus en détail le fonctionnement proprement dit du dispositif.

L'unité de dialogue-objet possède d'une façon générale un état de repos dans lequel seule la mémoire de travail M1 et les moyens de détection sont alimentés, ainsi qu'un état actif dans lequel tous les éléments constitutifs de cette unité de dialogue sont alimentés.

Lors de la mise en place de la pile, la carte est alimentée. Le microcontrôleur est remis à zéro et passe dans son état de repos, la patte d'interruption du microcontrôleur est à l'état haut.

Lorsque la carte pénètre dans le domaine de portée DP du terminal, les moyens de détection fournissent alors une indication représentative de la présence de cette carte dans le domaine de portée et celle-ci passe dans son état actif.

On verra plus loin que certaines précautions, sur lesquelles on reviendra plus en détail ci-après, sont à envisager pour effectuer cette commutation, notamment pour s'assurer de la stabilité effective du champ magnétique.

On suppose maintenant que l'unité de dialogue-objet est effectivement passée dans son état actif et que la carte se trouve dans une zone stable de champ magnétique.

Les moyens de commande-station et les moyens de commande-objet confèrent respectivement aux moyens de traitement-station et aux moyens de traitement-objet une condition primaire et une condition d'initialisation dans lesquelles la station et les différents objets portatifs vont entamer un dialogue ayant pour but, d'une part, de gérer les conflits éventuels pouvant apparaître lorsque plusieurs objets portatifs se présentent simultanément dans le domaine de portée et, d'autre part, de sélectionner l'un de ces objets portatifs.

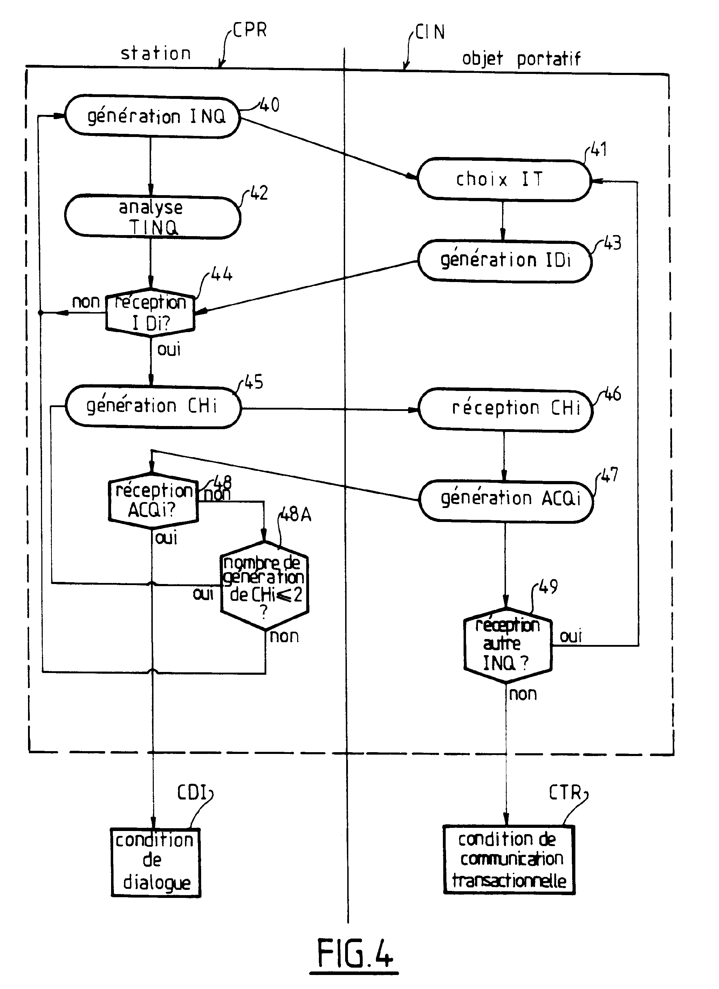

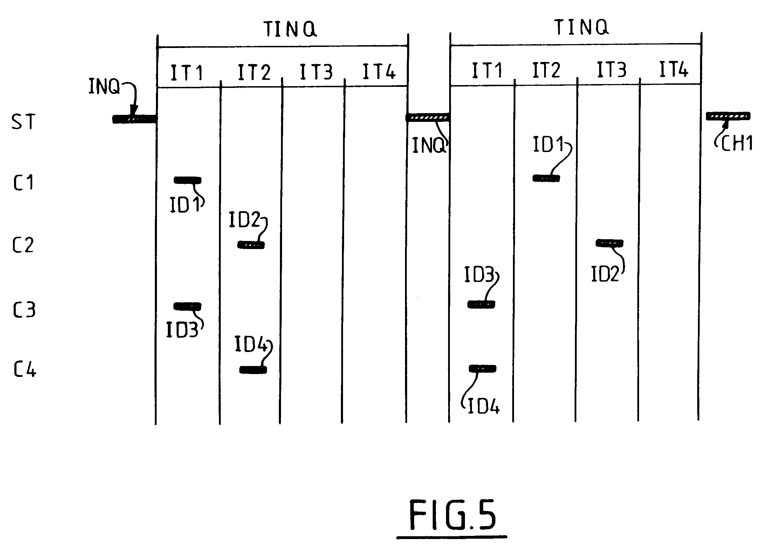

On se réfère pour cela plus particulièrement aux figures 4 et 5.

Les moyens de traitement-station, dans leur condition primaire CPR, génèrent un message d'interrogation INQ dans le domaine de portée (étape 40). Cette génération du message INQ est suivie d'une zone de silence TINQ subdivisée en une pluralité d'intervalles temporels disjoints. La zone de silence TINQ, d'une durée de 32 millisecondes, est ici subdivisée en quatre intervalles de temps IT1-IT4 ayant une durée identique de 8 millisecondes.

Les moyens de traitement-station vont alors analyser sélectivement les contenus respectifs de ces intervalles temporels disjoints dans le but d'identifier le contenu de l'un d'entre eux comme un message de réponse prédéterminé associé à un seul objet portatif (étape 42).

A réception de ce message d'interrogation INQ, chaque objet portatif choisit aléatoirement l'un des intervalles temporels IT1-IT4 (étape 41). A titre d'exemple, le numéro de l'intervalle temporel est choisi en multipliant le numéro de la carte par 127 et en ajoutant au résultat de ce produit l'indication courante de l'horloge interne du microcontrôleur. Le nombre ainsi obtenu est ensuite ramené dans l'intervalle 1-4 à l'aide d'une opération modulo 4.

Après avoir choisi un intervalle temporel, chaque moyen de traitement-objet génère le message de réponse prédéterminé, qui est ici un message d'identification IDi associé de façon univoque à cet objet. Ce message d'identification peut être transmis dans la zone de portée à l'intérieur de l'intervalle temporel choisi puisque les moyens de traitement-objet possèdent leur propre référence de temps. Il est préférable que la transmission de ce message soit centrée au milieu de l'intervalle temporel. Par ailleurs, afin d'éviter le chevauchement dû aux erreurs de comptage temporel des moyens de traitement-objet, la durée de ce message d'identification est avantageusement choisie égale à la moitié de la durée de l'intervalle temporel. Ainsi, comme on le verra après, chaque message d'identification IDi est composé de quatre octets dont la durée de transmission est d'environ 4 millisecondes à la vitesse choisie de 9600 bauds.

En cas d'obtention dans l'un des intervalles temporels d'un contenu identifié comme un message d'identification associé à un seul objet portatif (étape 44), les moyens de traitement-station génèrent alors un message de sélection CHi destiné à cet objet portatif. A réception de ce message de sélection CHi (étape 46), l'objet portatif sélectioné génère un message d'acquittement ACQi (étape 47), à réception duquel (étape 48), les moyens de commande-station font passer les moyens de traitement-station de leur condition primaire à une condition de dialogue CDI avec cet objet portatif i.

Parallèlement, et puisqu'alors, comme on le verra ci-après, les moyens de traitement-station n'émettent plus de nouveaux messages d'interrogation INQ (étape 49), les moyens de commande-objet font alors commuter les moyens de traitement-objet de la condition d'initialisation à une condition de communication transactionnelle CTR avec la station.

Tout autre objet portatif recevant le message de sélection CHi associé à l'objet portatif i, reste en attente jusqu'à la réception d'un nouveau message d'interrogation INQ.

Dans le cas où, dans l'étape 44, les moyens de traitement-station n'identifient dans aucun des intervalles temporels IT1-IT4 un message d'identification associé à un seul objet portatif, ils répètent, à la fin de la zone de silence TINQ, les opérations de génération du message d'interrogation INQ et d'analyse sélective des contenus respectifs de ces intervalles temporels. Cette impossibilité d'identification de la part des moyens de traitement-station peut résulter d'une absence de réponse dans un intervalle temporel ou bien de deux messages d'identification émis par deux objets portatifs distincts dans le même intervalle temporel.

Les moyens d'analyse-station répètent alors les étapes 40 et 42 jusqu'à l'obtention dans l'un des intervalles temporels d'un contenu identifié comme un message d'identification associé à un seul objet portatif.

De la même façon, si les moyens de traitement-station ne reçoivent pas dans l'étape 48 le message d'acquittement ACQi associé à l'objet portatif sélectionné (ou reçoivent un message erroné), ils répètent l'étape 45 sauf si un nombre choisi (ici deux) de messages CHi ont déjà été générés (étape 48A). Dans cette dernière éventualité, les moyens de traitement-station réexécutent les étapes 40 et 42, et les moyens de traitement-objet de l'objet portatif, préalablement sélectionnés à la suite de la réception du message de sélection CHi dans l'étape 46, ne passeront pas dans leur condition de communication transactionnelle en raison de la réception d'un nouveau message d'interrogation INQ dans l'étape 49.

Un exemple de sélection d'une carte parmi quatre cartes C1, C2, C3, C4 est illustré sur la figure 5.

Après que la station ST a émis le message d'interrogation INQ, les cartes C1 et C3 ont transmis leurs messages d'identification respectifs ID1, ID3 à l'intérieur du même intervalle temporel IT1 tandis que les cartes C2 et C4 ont transmis leur messages d'identification respectifs ID2, ID4 à l'intérieur du deuxième intervalle temporel IT2.

Les moyens de traitement-station n'ont donc pu identifier dans aucun intervalle temporel un message d'identification associé à un seul objet portatif. A l'issue de la zone de silence TINQ, le message d'interrogation INQ est à nouveau généré.

Cette fois-ci, alors que les cartes C3 et C4 ont choisi le premier intervalle temporel IT1 pour émettre leurs messages d'identification respectifs, la carte C1 a choisi l'intervalle IT2 tandis que la carte C2 a choisi l'intervalle IT3.

Les moyens de traitement-station, après avoir scruté l'intervalle IT1 pour conclure à la non-identification d'un message d'identification, analysent le contenu de l'intervalle IT2 et identifient celui-ci comme étant le message d'identification ID1 associé à la carte C1.

Le message de sélection CH1 est alors émis dans la zone de portée à destination de tous les objets portatifs et particulièrement à destination de la carte C1.

La transaction pourra donc s'établir ensuite entre cette carte C1 et la station, tandis que les autres cartes restent en attente jusqu'à réception d'un nouveau message d'interrogation INQ à la fin de cette transaction.

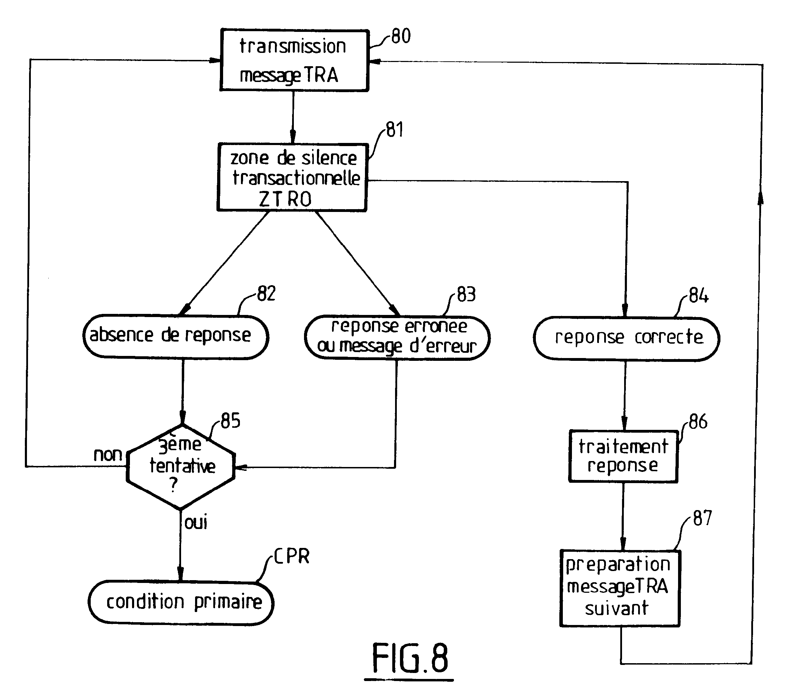

La figure 6 illustre la structure des messages échangés dans les conditions primaire CPR et d'initialisation CIN. Alors que le message d'interrogation INQ ne comporte qu'un seul caractère dont le mot porte la référence AA, chacun des messages d'identification IDi, de sélection CHi et d'acquittement ACQi comporte un caractère de tête spécifique au message (plus précisément, les mots respectifs F0, F1, F2 de ces caractères de tête sont différents pour chaque type de message). Ce caractère de tête est suivi d'un nombre prédéterminé de caractères d'identification associé de façon bi-univoque à l'objet portatif. Ce nombre est ici de deux et le mot de chacun de ces caractères d'identification est référencé i. Ces trois caractères sont enfin suivis d'un caractère final dont le mot CS contient une information de validité des contenus des mots des caractères précédents. Cette information sera de préférence égale à la valeur d'une fonction logique OU EXCLUSIF des contenus des mots des caractères précédents (en langue anglaise "checksum").

Une telle information contenue dans le caractère final permettra ainsi à l'organe recevant un message (la station ou un objet portatif) de vérifier l'exactitude de son contenu, en recalculant le mot du caractère final à partir des mots des caractères précédents, et en le comparant au mot CS du caractère final effectivement reçu.

Dans les conditions de dialogue et de communication transactionnelle, l'échange d'informations s'effectue par l'intermédiaire de messages transactionnels TRA dont la structure est illustrée sur la figure 7.

Chaque message transactionnel comporte un caractère de contrôle dont le mot CCT possède un bit c représentatif de la première transmission du message transactionnel ou de sa répétition éventuelle, un bit o/r indiquant l'origine de ce message, c'est-à-dire l'émission de ce message par la station ou par l'objet portatif, ainsi qu'un nombre prédéterminé de bits, ici quatre, indiquant le nombre de caractères de données du message transactionnel TRA. Les deux premiers bits du mot sont ici égaux à zéro et ne sont pas utilisés dans cette application.

Le message transactionnel TRA comporte, à la suite du caractère de contrôle, une pluralité de caractères de données dont le nombre L est déterminé par le mot du caractère de contrôle. Les mots de ces caractères de données sont désignés ici sous les références MT1-MTL.

Le message transactionnel comporte enfin également un caractère final CS analogue aux caractères finaux des messages échangés dans les conditions primaire et d'initialisation.

D'une façon générale, le mot MT1 du premier caractère de données MT1 d'un message transactionnel transmis depuis la station vers l'objet portatif contient une indication représentative d'un type d'opération à effectuer par l'objet portatif. Le nombre de caractères de données et/ou leurs contenus respectifs dépendent alors de ladite indication.

Parallèlement, le message transactionnel de réponse émis par l'unité de dialogue-objet à réception d'un tel message transactionnel TRA comporte un premier caractère de donnée dont le mot contient une indication de réponse représentative de l'exécution de ladite opération.

Le protocole de transmission des messages transactionnels TRA est illustré sur la figure 8.

Chaque message TRA transmis par l'unité de dialogue-station (étape 80) est suivi d'une zone de silence transactionnel ZTRO au cours de laquelle les moyens de traitement-station sont propres à analyser la réponse transmise par l'unité de dialogue-objet.

Trois cas peuvent se produire et portent respectivement les références 82, 83 et 84.

En cas d'absence de réponse ou en cas de réception d'une réponse erronée (ou d'un message d'erreur) de la part de l'unité de dialogue-objet (82, 83), les moyens de traitement-station sont propres à répéter la transmission du message TRA à la fin de la zone de silence transactionnel ZTRO.

Cependant, après un nombre prédéterminé de répétitions (étape 85), les moyens de commande-station sont propres à faire passer les moyens de traitement-station de leur condition de dialogue CDI à leur condition primaire CPR. Ce nombre est choisi ici égal à 3.

Une réponse peut être erronée si par exemple il y a erreur sur le mot CS du caractère final ou bien si par exemple le contenu du mot du premier caractère de donnée transmis par la carte vers le terminal ne correspond pas à l'exécution de la commande ordonnée dans la transmission du message d'origine TRA.

La durée de cette zone de silence transactionnel ZTRO est variable et dépend du contenu opérationnel du message transmis. Plus précisément, afin de ne pas pénaliser l'échange d'informations, les moyens de traitement-station ajustent cette durée en fonction de la nature de l'opération demandée et du temps de réponse de l'objet portatif que ces moyens de traitement-station estiment. En effet, une simple opération de calcul nécessite un temps plus long qu'une simple opération de lecture. Ainsi, à titre d'exemple, la durée de cette zone de silence ZTRO peut varier entre 10 millisecondes et 300 millisecondes.

Dans le cas (référence 84) où les moyens de traitement-station analysent le contenu du message de réponse transactionnel comme correct, ce message de réponse est traité (86) puis le message transactionnel suivant est préparé (étape 87) afin d'être transmis à l'unité de dialogue-objet (étape 80).

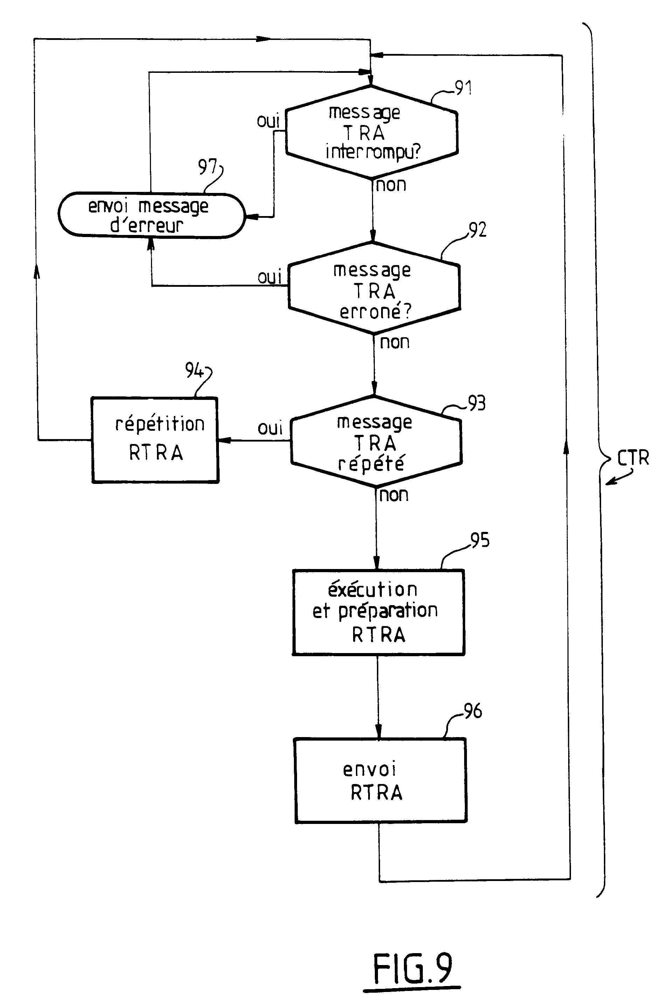

On se réfère maintenant plus particulièrement à la figure 9 qui illustre le protocole des moyens de traitement-objet dans leur condition de communication transactionnelle CTR.

En supposant que le message transactionnel TRA émis par l'unité de dialogue-station et reçu par l'unité de dialogue-objet ne soit ni interrompu ni erroné ni répété, les moyens de traitement-objet exécutent l'opération demandée par la station et préparent le message de réponse transactionnel RTRA correspondant (étape 95) puis le transmettent dans l'étape 96.

Si le message TRA s'avère interrompu (étape 91) ou bien si ce message TRA s'avère erroné (étape 92) (par exemple dont le mot CS du caractère final est erroné), les moyens de traitement-objet transmettent alors à destination de la station un message d'erreur (étape 97).

La notion de message interrompu englobe ici l'interruption effective d'un message (due par exemple à une absence de champ magnétique) et la constatation d'une durée séparant la réception de deux octets successifs supérieure à une valeur choisie. Cette valeur (ici 8 millisecondes) est choisie nettement supérieure à la durée normale de transmission d'un octet (environ 1 milliseconde).

Dans le cas où, par exemple à la suite d'une coupure de transmission entre la carte et le terminal, il s'avère que le message reçu l'avait déjà été précédemment (étape 93), les moyens de traitement-objet ne réexécutent pas l'ordre et renvoient (étape 94) le message de réponse qu'ils avaient précédemment établi et transmis vers l'unité de dialogue-station. On rappelle ici que l'indication de la répétition d'un message est fournie par le bit c de l'octet de contrôle.

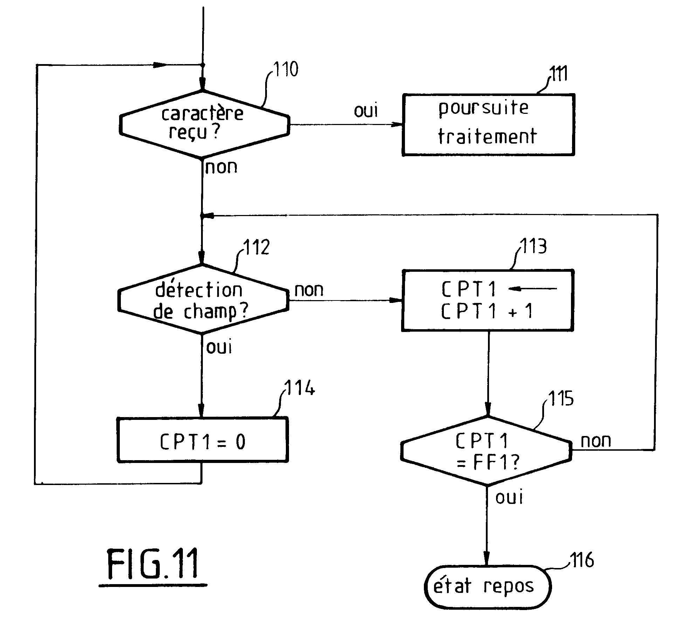

Dans les conditions de dialogue et de communication transactionnelle, l'unité de dialogue-station est propre à transmettre, en fin de transaction, un message de fin de transaction FNi tandis que l'unité de dialogue-objet est propre, en réponse à ce message de fin de transaction, à transmettre un message d'acquittement final ACFi. Les structures respectives de ces deux messages sont illustrées sur la figure 10 et sont analogues à celles des messages d'identification, de sélection et d'acquittement de la figure 6.

Une autre caractéristique de l'invention réside en ce que chaque mot d'un caractère ayant un nombre de bits égaux à zéro supérieur à un seuil prédéterminé est complémenté à deux avant sa transmission, et ce au moins lorsque ledit caractère est destiné à être transmis de l'objet portatif vers la station. Dans le cas présent, un octet dont le nombre d'éléments binaires à zéro sera supérieur à quatre est complémenté avant sa transmission depuis la carte vers le terminal.

Il a été en effet observé qu'un octet comportant plus de 0 que de 1 pouvait amoindrir la qualité de la transmission asynchrone au moins dans le sens carte-terminal en raison des particularités de la transmission utilisée ici (variation de la fréquence de travail d'un oscillateur). Une telle opération de complémentation remédie à cet inconvénient.

Il s'est alors avéré particulièrement intéressant d'utiliser le bit de parité bp du caractère, c'est-à-dire le neuvième élément binaire programmable de la liaison-série du microcontrôleur, pour indiquer si l'octet est complémenté ou non. Ainsi, par convention, la mise à 1 de cet élément binaire signifie que l'octet est complémenté. Un avantage de cette opération de complémentation réside dans le fait qu'il n'est alors pas nécessaire d'utiliser un octet supplémentaire à l'émission. On rappelle en effet que l'émission d'un octet à 9600 bauds dure environ 1 milliseconde et s'avère non négligeable devant la durée d'une transaction dont le minimum est de 10 millisecondes (ou 10+32=42 millisecondes si la condition d'initialisation est à inclure dans ce que l'on appelle la transaction), pour aller jusqu'à 400 millisecondes.

Avant de décrire les autres particularités de l'échange d'informations entre la station et l'objet portatif, il convient de revenir à la détection des limites du domaine de portée défini par la station, ou en d'autres termes sur la détection des limites du champ magnétique engendré par l'élément inductif-station.

On a vu dans le cas particulier décrit ici que lorsque la patte d'interruption du microcontrôleur est dans son état bas, ceci est représentatif de la présence de la carte dans le champ magnétique tandis que lorsque cette patte d'interruption est à l'état haut, ceci est représentatif de la présence de la carte hors du domaine de portée.

Ceci étant, les différents états de cette patte d'interruption sont mémorisés dans la mémoire-tampon d'entrée du microcontrôleur. Les moyens de commande-objet sont alors propres à analyser séquentiellement le contenu de cette mémoire en des instants d'analyse d'une pluralité de périodes d'analyse prédéterminées.

L'une de ces périodes d'analyse est l'attente d'un caractère en provenance de l'unité de dialogue-station et est illustrée sur la figure 11.

Si le caractère est effectivement reçu (étape 110), le traitement se poursuit normalement (étape 111). Par contre, dans le cas d'une absence de réception d'un caractère, les moyens de commande-objet vont séquentiellement analyser le contenu de la mémoire-tampon du microcontrôleur (étape 112) et incrémenter un compteur CPT1 (étape 113) à chaque fois que l'interrogation de la mémoire fournira une indication représentative d'une présence de l'unité de dialogue-objet hors du domaine de portée (patte à l'état haut).

Au bout d'un nombre prédéterminé d'instants d'analyse successifs de cette période d'analyse, ayant conduit à une valeur du compteur CPT1 égale à un nombre prédéterminé FF1 correspondant ici à une durée de 28 millisecondes, les moyens de commande-objet sont alors propres à faire passer les moyens de traitement-objet de leur état actif à leur état de repos, puisque cette situation signifie alors que la carte est sortie du domaine de portée. Il n'y a donc pas lieu de continuer à alimenter tous les éléments consécutifs de cette carte.

Par contre, dès que la mémoire-tampon comporte une indication signifiant que la patte d'interruption est à l'état bas, c'est-à-dire par exemple lorsqu'il y a eu réception d'un élément binaire à 1 (tel que le premier bit bs d'un caractère), le compteur CPT1 est remis à zéro (étape 114) jusqu'à la prochaine analyse.

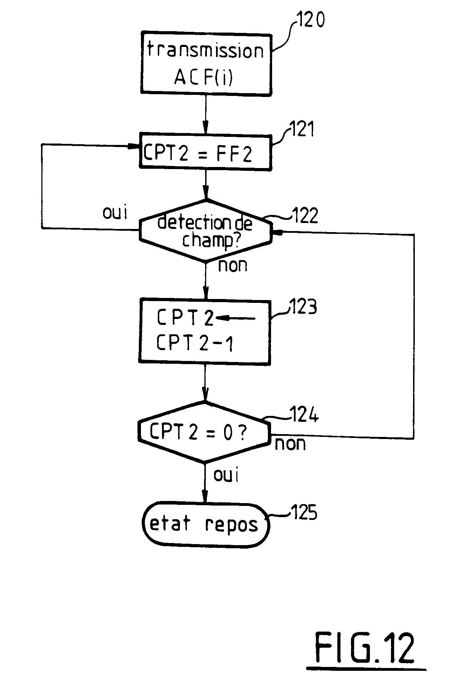

Une deuxième période d'analyse débute (figure 12) à partir d'un instant d'analyse initial intervenant après la transmission 120 du message d'acquittement final ACFi. Un deuxième compteur CPT2 est alors forcé à une valeur de référence FF2 (étape 121). A partir de là, les moyens de commande-objet analysent séquentiellement le contenu de la mémoire-tampon et décrémentent le compteur CPT2 (étape 123) à chaque fois que la patte d'interruption du microcontrôleur est vue à l'état haut. Lorsque le compteur CPT2 (étape 124) a atteint la valeur 0, correspondant ici à une durée de temporisation de 0,7 seconde, les moyens de commande-objet commutent les moyens de traitement-objet de leur état actif à leur état de repos (étape 115).

Le passage des moyens de traitement-objet de leur état actif à leur état de repos s'est ainsi produit lorsque l'analyse de l'état de la patte d'interruption du microcontrôleur a révélé une présence de l'unité de dialogue-objet hors du domaine de portée pendant un nombre prédéterminé d'instants d'analyse successifs comptés à partir d'un instant de référence qui est ici l'instant d'analyse initial.

Cependant, si au cours de cette analyse, il s'avère qu'à un instant courant, la patte d'interruption est à l'état bas, signifiant que la carte se trouve à nouveau dans le champ magnétique, le compteur CPT2 est réinitialisé, et l'analyse se poursuit à partir de cet instant courant pris comme nouvel instant d'analyse de référence.

En d'autres termes, il a été observé qu'une temporisation de 0,7 seconde était ici nécessaire pour laisser le temps au porteur de la carte de sortie du domaine de portée sans lancer une nouvelle transaction entre la carte et un objet portatif. A l'intérieur de cette temporisation, la présence de l'objet portatif à l'intérieur du domaine de portée est testée en permanence pour s'assurer du mouvement du porteur de cette carte. Ceci permet ainsi de prendre en compte pratiquement tous les comportements humains tels que ceux que l'on peut rencontrer avec un utilisateur lent, pressé, négligent.

Tout comme la sortie de l'objet portatif du domaine de portée doit être traitée avec précaution car elle est dépendante de l'attitude du porteur, comme on vient de le voir, certaines précautions sont à prendre lors de l'entrée d'un objet portatif dans le domaine de portée.

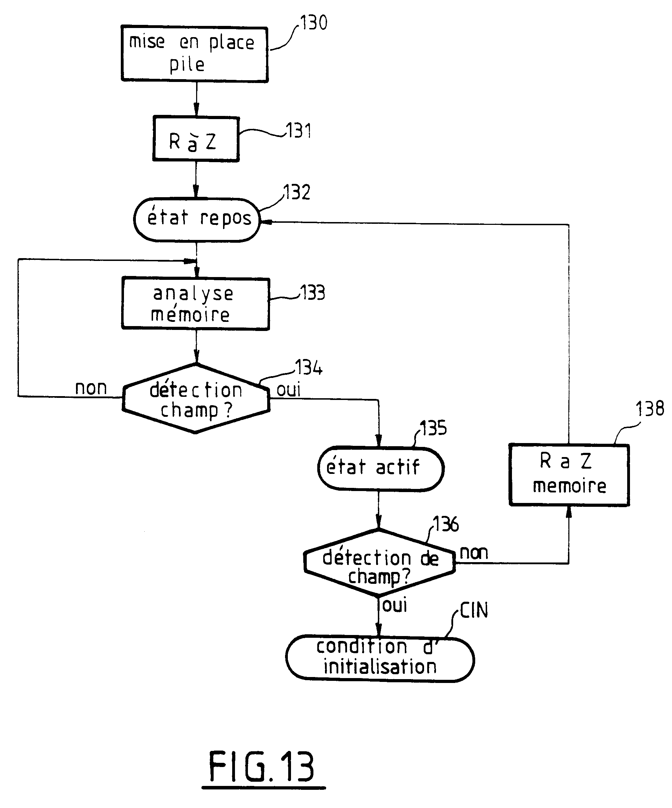

Ceci est illustré sur la figure 13.

Comme déjà évoqué précédemment, à la mise en place de la pile (étape 130), le microcontrôleur de la carte est alimenté, puis remis à zéro (étape 131), et les moyens de traitement-objet sont alors dans leur état de repos 132.

L'analyse de mémoire effectuée dans l'étape 133 révèle alors une patte d'interruption à l'état haut. Lorsque la carte pénètre dans le domaine de portée de la station, une interruption matérielle, véhiculée par la patte d'interruption du microcontrôleur (état bas), et provoquée par la résonance du circuit oscillant, est mémorisée dans la mémoire-tampon.

Les moyens de commande-objet commutent alors les moyens de traitement-objet de leur état de repos à leur état actif (étape 135).

Cependant, il a été observé que les limites du domaine de portée ne sont généralement pas des limites franches. En d'autres termes, il existe des irrégularités du champ magnétique au voisinage de ces limites du domaine de portée.

C'est pourquoi, une fois que l'unité de dialogue-objet est dans son état actif, les moyens de commande-objet ne font passer les moyens de traitement-objet dans leur condition d'initialisation que dans le cas où l'analyse de la mémoire-tampon ne révèle, pendant un nombre prédéterminé d'instants successifs correspondant à une durée de 0,2 millisecondes aucune indication de la présence de l'unité de dialogue hors du domaine de portée. Dans le cas contraire, c'est-à-dire lorsqu'au cours de cette période d'analyse il s'avère que la patte d'interruption revient à l'état haut, signifiant que, en raison notamment des irrégularités du champ magnétique, la carte n'est pas encore totalement entrée dans la zone stable, les moyens de commande-objet font passer l'unité de dialogue-objet de son état actif dans son état de repos.

Cependant, compte tenu du fait que la mémoire-tampon du microcontrôleur mémorisant les états de la patte d'interruption est une mémoire-verrou ("latch" en langue anglaise), les irrégularités du champ magnétique ont pu créer une mise en attente automatique d'états bas de la patte d'interruption qui sont masqués tant que l'objet portatif échange des informations dans les conditions d'initialisation et de communication transactionnelle, et qui seront actifs au retour dans l'état de repos de l'unité de dialogue-objet lorsque le porteur sortira du domaine de portée. Il en résultera alors, malgré la temporisation de 700 millisecondes utilisée ici, une nouvelle transaction inutile entre le porteur et la station.

Aussi, pour éviter un tel inconvénient, les moyens de commande-objet effacent (étape 138) le contenu de la mémoire-verrou.

Le dispositif selon l'invention trouve des applications dans de nombreux domaines comme l'accès à un bâtiment, le paiement automatique dans un restaurant d'entreprise, ou l'accès à un parking. Toutes ces applications peuvent être éventuellement réalisées par une même carte et se distinguent alors entre elles par un identifiant d'application contenu dans la mémoire permanente M2 de la carte.

Il convient également de remarquer qu une carte peut éventuellement être utilisée à l'insu de son propriétaire puisqu'aucun acte volontaire n'est a priori nécessaire de la part de l'utilisateur de la carte pour que celle-ci commute de son état de repos à son état actif. C'est pourquoi il a été prévu que certains au moins des objets portatifs comportent les moyens de validation spécifiques MV propres à être commandés par l'utilisateur pour autoriser ou non l'échange d'informations avec la station. Ces moyens peuvent comprendre par exemple un bouton-poussoir de validation sur la carte, qui doit être actionné avant l'utilisation de celle-ci, pour les applications requérant cette fonctionnalité.

Les moyens de traitement-objet autorisent alors le lancement d'une telle application seulement si le bouton de validation a été auparavant activé. Il est alors prévu que la carte redevienne par la suite invalide. Néanmoins, pour des raisons de sécurité, il peut également être prévu qu'un mécanisme de temporisation invalide de toute façon la carte après un certain temps, par exemple une minute, même si aucune application n'a été activée.

L'invention n'est pas limitée au mode de réalisation ci-dessus décrit mais en embrasse toutes les variantes contenues dans le cadre des revendications ci-après.

Bien entendu, certains des moyens décrits ci-dessus peuvent être omis dans les variantes où ils ne servent pas.

## Revendications

1. Dispositif pour l'échange d'informations à distance entre une station et un ou plusieurs objets portatifs, comprenant, sur la station, une unité de dialogue-station (UDS) propre à délimiter un domaine de portée (DP), et, sur le ou chaque objet portatif, une unité de dialogue-objet (UDO) possédant un état actif dans lequel elle est propre à coopérer mutuellement à distance avec l'unité de dialogue-station à l'intérieur dudit domaine de portée, pour effectuer ledit échange d'informations, l'unité de dialogue-station comprenant :
- des moyens de traitement-station (MTS) possédant :
* une condition primaire (CPR) dans laquelle ils sont propres à
a) générer un message d'interrogation (INQ) dans ledit domaine de portée, suivi d'une zone de silence (TINQ),
b) analyser le contenu de ladite zone de silence, et
c) en cas d'obtention du contenu identifié comme un message de réponse prédéterminé (IDi) associé à un seul objet portatif, générer un message de sélection (CHi) destiné audit objet portatif, et, dans le cas contraire répéter, à la fin de ladite zone de silence (TINQ), les opérations a) et b), et
* une condition de dialogue (CDI) avec l'objet portatif sélectionné, et
- des moyens de commande-station propres à sélectionner les différentes conditions de moyens de traitement-station en fonction de critères de commande-station prédéterminés, la ou chaque unité de dialogue-objet comportant des moyens de traitement-objet (MTO) possédant, dans ledit état actif,
* une condition dans laquelle ils sont propres, à réception dudit message d'interrogation (INQ) à
e) générer ledit message de réponse predétermine (IDi) associé à cet objet, et
f) générer un message d'acquittement (ACQi) en cas de réception dudit message de sélection (CHi), et
* une condition de communication transactionnelle (CTR) avec l'unité de dialogue-station, ainsi que
- des moyens de commande-objet (MCO) propres à faire passer les moyens de traitement-objet à la condition de communication transactionnelle
caractérisé en ce que
dans la condition primaire (CPR) les moyens de traitement-station (MTS) sont propres à analyser sélectivement les contenus respectifs d'une pluralité d'intervalles temporels disjoints (IT1-IT4) de ladite zone de silence (TINQ),
en ce que les moyens de traitement-objet (MTO) possèdent une condition d'initialisation (CIN) dans laquelle ils sont propres à choisir aléatoirement l'un desdits intervalles temporels et à générer le message de réponse prédéterminé (IDi) à l'intérieur de l'intervalle temporel choisi,
et en ce que les moyens de traitement-objet (MTO) passent de leur condition d'initialisation (CIN) à la condition de communication transactionnelle (CTR) en cas d'absence de réception d'un autre message d'interrogation après la transmission du message d'acquittement (ACQi).

2. Dispositif selon la revendication 1, caractérisé en ce que l'échange des informations est effectué de façon asynchrone par caractères comportant chacun un bit d'en-tête (bs), puis un mot (MT) ayant un nombre prédéterminé de bits de données, en principe un octet, suivis d'un bit de parité (bp) et d'un bit de fin (bf).

3. Dispositif selon l'une des revendications 1 et 2, caractérisé en ce que, dans lesdites conditions de dialogue et de communication transactionnelle, l'unité de dialogue-station est propre à transmettre un message de fin de transaction (FNi), tandis que l'unité de dialogue-objet est propre, en réponse à ce message de fin de transaction, à transmettre un message d'acquittement final (ACFi).

4. Dispositif selon la revendication 3, caractérisé en ce que lesdits messages de réponse (IDi), d'acquittement (ACQi), de sélection (CHi), de fin de transaction (FNi) et d'acquittement final (ACFi) comportent chacun un caractère de tête spécifique au message, et un nombre prédéterminé de caractères d'identification associés de façon biunivoque à l'objet portatif.

5. Dispositif selon l'une des revendications précédentes, caractérisé en ce que, dans les conditions de dialogue et de communication transactionnelle, l'échange d'informations comporte l'échange de messages transactionnels (TRA) comprenant chacun un caractère de contrôle suivi de caractères de données,
en ce que le mot du caractère de contrôle comporte un bit (c) représentatif de la première transmission du message transactionnel ou de sa répétition eventuelle, un bit (o/r) indiquant l'origine de ce message, ainsi qu'un nombre prédéterminé de bits indiquant le nombre de caractères de données du message.

6. Dispositif selon la revendication 5, caractérisé en ce que le mot du premier caractère de données d'un message transactionnel transmis depuis la station vers l'objet portatif comporte une indication représentative d'un type d'opération à effectuer par l'objet portatif,
en ce que le nombre de caractères de données et/ou leur contenu respectif dépendent de ladite indication,
et en ce que l'unité de dialogue-objet est propre en réponse à un tel message transactionnel à transmettre vers la station un message transactionnel de réponse dont le mot du premier caractère de données comporte une indication de réponse représentative de l'execution de l'opération.

7. Dispositif selon l'une des revendications 5 et 6, caractérisé en ce que, dans ladite condition de dialogue, chaque message transmis par l'unité de dialogue-station est suivi d'une zone de silence transactionnelle (ZTRO) au cours de laquelle les moyens de traitement-station sont propres à analyser la réponse transmise par l'unité de dialogue-objet,
en ce qu en cas d'absence de réponse ou en cas de réception d'une réponse érronée de la part de l'unité de dialogue-objet compte tenu du contenu du message transmis par l'unité de dialogue-station, cette dernière est propre à répéter la transmission dudit message à la fin de ladite zone de silence transactionnelle,
et en ce qu'après un nombre prédéterminé de répétition, les moyens de commande-station sont propres à faire passer les moyens de traitement-station de leur condition de dialogue à leur condition primaire.

8. Dispositif selon la revendication 7, caractérisé en ce que la durée de la zone de silence transactionnelle est variable et dépend du contenu opérationnel du message transmis.

9. Dispositif selon l'une des revendications 3 à 8, caractérisé en ce que les messages transactionnels (TRA), de réponse transactionnels (RTRA), de réponse (IDi), d'acquittement (ACQi), de sélection (CHi), de fin de transaction (FNi) et d'acquittement final (ACFi) comportent chacun un caractère final dont le mot (CS) contient une information de validité des contenus des mots des caractères précédents, de préférence égale à la valeur d'une fonction logique OU EXCLUSIF des contenus des mots des caractères précédents.

10. Dispositif selon l'une des revendications 2 à 9, caractérisé en ce que chaque mot d'un caractère ayant un nombre de bits égaux à zéro supérieur à un seuil prédéterminé est complémenté à deux avant sa transmission, au moins lorsque ledit caractère est déstiné à être transmis de l'objet portatif vers la station
et en ce que la valeur du bit de parité (bp) est représentative de cette complémentation éventuelle.

11. Dispositif selon l'une des revendications précédentes, caractérisé en ce que, dans le mode de communication transactionnelle, les moyens de traitement-objet sont propres à transmettre un message d'erreur à l'unité de dialogue-station en cas de réception d'un message transactionnel erroné et/ou en cas d'une durée séparant deux caractères du message transactionnel reçu, supérieure à une valeur choisie.

12. Dispositif selon l'une des revendications précédentes, caractérisé en ce que l'unité de dialogue-objet comporte des moyens de détection propres à délivrer une indication relative à la présence de l'unité de dialogue dans ledit domaine de portée,
en ce que l'unité de dialogue-objet comporte une mémoire reliée aux moyens de détection pour stocker ladite indication,
et en ce que les moyens de commande-objet sont propres à analyser séquentiellement le contenu de ladite mémoire en des instants d'analyse d'une pluralité de périodes d'analyse prédéterminées.

13. Dispositif selon la revendication 12, caractérisé en ce que l'unité de dialogue-objet possède un état de repos,
en ce qu'une première période d'analyse est l'attente d'un caractère en provenance de l'unité de dialogue-station,
et en ce que, dans le cas où cette analyse est représentative d'une présence de l'unité de dialogue-objet hors dudit domaine de portée pendant un premier nombre prédéterminé d'instants d'analyse successifs au cours de cette première période d'analyse, les moyens de commande-objet sont propres à faire passer les moyens de traitement-objet de leur état actif à leur état de repos.

14. Dispositif selon l'une des revendications 12 et 13, caractérisé en ce qu'une deuxième période d'analyse débute à partir d'un instant d'analyse initial intervenant après la transmission du message d'acquittement final (ACFi) jusqu à ce que ladite analyse révèle une présence de l'unité de dialogue-objet hors dudit domaine de portée pendant un deuxième nombre prédéterminé d'instants d'analyse successifs comptés à partir d'un instant d'analyse de référence, les moyens de commande-objet étant alors propres à faire passer les moyens de traitement-objet de leur état actif à leur état de repos,
et en ce que ledit instant d'analyse de référence est tout d'abord l'instant d'analyse initial, puis le cas échéant le dernier instant d'analyse courant pour lequel ladite indication est représentative d'une présence de l'unité de dialogue objet dans ledit domaine de portée.

15. Dispositif selon l'une des revendications 12 à 14, caractérisé en ce que la dite mémoire est une mémoire-verrou,
en ce qu'il est prévu une troisième période d'analyse lorsque l'unité de dialogue-objet est dans son état de repos,
en ce que les moyens de commande-objet sont propres à commuter l'unité de dialogue-objet de son état de repos à son état actif en présence d'une indication signifiant que l'unité de dialogue-objet se situe dans ledit domaine de portée, et à initialiser une quatrième période d'analyse après cette commutation,
et en ce que les moyens de commande-objet ne font passer les moyens de traitement-objet dans leur condition d'initialisation que dans le cas où ladite analyse ne révèle, pendant un quatrième nombre prédéterminé d'instants successifs au cours de cette quatrième période, aucune indication de la présence de l'unité de dialogue-objet hors du domaine de portée, tandis que, dans le cas contraire, les moyens de commande-objet font passer l'unité de dialogue-objet de son état actif dans son état de repos avec effacement du contenu de la mémoire-verrou.

16. Dispositif selon l'une des revendications précédentes, caractérisé en ce que l'un au moins des objets portatifs comporte des moyens de validation spécifiques (MV) propres à être commandés par l'utilisateur pour autoriser ou non l'échange d'informations avec la station.

17. Objet portatif, comprenant une unité de dialogue-objet possédant un état de repos et un état actif dans lequel elle est propre à coopérer à distance avec une station à l'intérieur d'un domaine de portée délimité par ladite station, pour effectuer un échange d'informations avec ladite station, l'unité de dialogue-objet comportant :
- des moyens de traitement-objet possédant, dans ledit état actif,
* une condition dans laquelle, à réception d'un message d'interrogation transmis par la station et suivi d'une zone de silence, ils sont propres
. à générer un message de réponse prédéterminé destiné à la station, et
. à générer un message d'acquittement en cas de réception, postérieurement à la génération dudit message de réponse, d'un message de sélection transmis par la station, et
* une condition de communication transactionnelle avec l'unité de dialogue-station, et
- des moyens de commande-objet propres à faire passer les moyens de traitement-objet à la condition de communication transactionnelle,
caractérisé en ce que les moyens de traitement-objet possèdent une condition d'initialisation dans laquelle ils sont propres à choisir aléatoirement l'un des intervalles temporels disjoints de ladite zone de silence et à générer le message de réponse prédéterminé à l'intérieur de l'intervalle temporel choisi,
et en ce que les moyens de traitement-objet passent de leur condition d'initialisation à la condition de communication transactionnelle en cas d'absence de réception d'un autre message d'interrogation après la transmission du message d'acquittement.

18. Objet portatif selon la revendication 17 prise en combinaison avec l'une des revendications 2 à 6 et 9 à 15.

19. Station appartenant au dispositif selon l'une des revendications 1 à 16.

## Patentansprüche

1. Vorrichtung für den Datenfernaustausch zwischen einer Station und einem oder mehreren tragbaren Objekten, die auf der Station eine Stations-Dialogeinheit (UDS), die in der Lage ist, einen Reichweitenbereich (DP) abzugrenzen, und auf dem oder auf jedem tragbaren Objekt eine Objekt-Dialogeinheit (UDO) aufweist, die einen aktiven Zustand besitzt, in dem sie in der Lage ist, wechselweise mit der Stations-Dialogeinheit innerhalb dieses Reichweitenbereichs auf Distanz zusammenzuarbeiten, um diesen Datenaustausch auszuführen, wobei die Stations-Dialogeinheit folgende Mittel umfaßt:
- Stations-Verarbeitungsmittel (MTS), die folgendes besitzen:
* einen Primärzustand (CPR), in dem sie in der Lage sind,
a) in diesem Reichweitenbereich eine Abfragemeldung (INQ) zu generieren, auf welche eine Schweigezone (TINQ) folgt,
b) den Inhalt dieser Schweigezone zu analysieren und
c) wenn ein Inhalt erhalten wird, der als eine einem einzigen tragbaren Objekt zugeordnete vorbestimmte Antwortmeldung (IDi) identifiziert wird, eine Wählmeldung (CHi) zu generieren, die für dieses tragbare Objekt bestimmt ist, und im entgegengesetzten Fall nach dieser Schweigezone (TINQ) die Operationen a) und b) zu wiederholen, und
* einen Zustand (CDI) des Dialogs mit dem gewählten tragbaren Objekt,
und
- Stations-Steuermittel, die in der Lage sind, die verschiedenen Zustände der Stations-Verarbeitungsmittel in Abhängigkeit von vorbestimmten Stations-Steuerkriterien zu wählen, wobei die oder jede Objekt-Dialogeinheit Objekt-Verarbeitungsmittel (MTO) aufweist, die in diesem aktiven Zustand folgendes besitzen:
* einen Zustand, in dem sie in der Lage sind, bei Empfang dieser Abfragemeldung (INQ)
e) diese diesem Objekt zugeordnete vorbestimmte Antwortmeldung (IDi) zu generieren und
f) im Fall des Empfangs dieser Wählmeldung (CHi) eine Quittungsmeldung (ACQi) zu generieren, und
* einen Zustand (CTR) der Transaktionskommunikation mit der Stations-Dialogeinheit, sowie
- Objekt-Steuermittel (MCO), die in der Lage sind, die Objekt-Verarbeitungsmittel in den Transaktionskommunikationszustand übergehen zu lassen,
dadurch gekennzeichnet,
daß die Stations-Verarbeitungsmittel (MTS) im Primärzustand (CPR) in der Lage sind, die jeweiligen Inhalte einer Vielzahl von nicht aneinandergrenzenden Zeitintervallen (IT1-IT4) dieser Schweigezone (TINQ) selektiv zu analysieren,
daß die Objekt-Verarbeitungsmittel (MTO) einen Initialisierungszustand (CIN) besitzen, in dem sie in der Lage sind, aleatorisch eines dieser Zeitintervalle zu wählen und innerhalb des gewählten Zeitintervalls die vorbestimmte Antwortmeldung (IDi) zu generieren,
und daß die Objekt-Verarbeitungsmittel (MTO) im Fall des Fehlens eines Empfangs einer anderen Abfragemeldung nach der Übertragung der Quittungsmeldung (ACQi) von ihrem Initialisierungszustand (CIN) in den Transaktionskommunikationszustand (CTR) übergehen.

2. Vorrichtung nach Anspruch 1, dadurch gekennzeichnet, daß der Austausch der Daten asynchron durch Zeichen vorgenommen wird, die jeweils ein Kopfbit (bs), dann ein Wort (MT) mit einer vorbestimmten Anzahl von Datenbits, im Prinzip ein Byte, aufweisen, auf welche ein Paritätsbit (bp) und ein Endbit (bf) folgen.

3. Vorrichtung nach einem der Ansprüche 1 und 2, dadurch gekennzeichnet, daß die Stations-Dialogeinheit in diesen Dialog- und Transaktionskommunikationszuständen in der Lage ist, eine Transaktionsendemeldung (FNi) zu übertragen, während die Objekt-Dialogeinheit in der Lage ist, als Antwort auf diese Transaktionsendemeldung eine Endquittungsmeldung (ACFi) zu übertragen.

4. Vorrichtung nach Anspruch 3, dadurch gekennzeichnet, daß diese Antwort-, Quittungs-, Wähl-, Transaktionsende- und Endquittungsmeldungen (IDi, ACQi, CHi, FNi, ACFi) jeweils ein für die Meldung spezifisches Kopfzeichen und eine vorbestimmte Anzahl von Identifizierungszeichen aufweisen, die dem tragbaren Objekt eineindeutig zugeordnet sind.

5. Vorrichtung nach einem der vorhergehenden Ansprüche, dadurch gekennzeichnet, daß der Datenaustausch in den Dialog- und Transaktionskommunikationszuständen den Austausch von Transaktionsmeldungen (TRA) umfaßt, die jeweils ein Kontrollzeichen aufweisen, auf welches Datenzeichen folgen, daß das Wort des Kontrollzeichens ein Bit (c), das die erste Übertragung der Transaktionsmeldung oder ihre ggf. stattfindende Wiederholung darstellt, ein Bit (o/r), das den Ursprung dieser Meldung angibt, sowie eine vorbestimmte Anzahl von Bits aufweist, die die Anzahl von Meldungsdatenzeichen angeben.

6. Vorrichtung nach Anspruch 5, dadurch gekennzeichnet, daß das Wort des ersten Datenzeichens einer von der Station zum tragbaren Objekt übertragenen Transaktionsmeldung eine Angabe aufweist, die einen von dem tragbaren Objekt auszuführenden Operationstyp darstellt,
daß die Anzahl von Datenzeichen und/oder ihr jeweiliger Inhalt von dieser Angabe abhängen
und daß die Objekt-Dialogeinheit in der Lage ist, als Antwort auf eine solche Transaktionsmeldung zur Station eine Antwort-Transaktionsmeldung zu übertragen, in der das Wort des ersten Datenzeichens eine die Ausführung der Operation darstellende Antwortangabe aufweist.

7. Vorrichtung nach einem der Ansprüche 5 und 6, dadurch gekennzeichnet, daß in dem Dialogzustand auf jede von der Stations-Dialogeinheit übertragene Meldung eine Transaktionsschweigezone (ZTRO) folgt, während der die Stations-Verarbeitungsmittel in der Lage sind, die von der Objekt-Dialogeinheit übertragene Antwort zu analysieren,
daß die Stations-Dialogeinheit im Fall des Fehlens einer Antwort oder im Fall des Empfangs einer fehlerhaften Antwort von Seiten der Objekt-Dialogeinheit unter Berücksichtigung des Inhalts der von der Stations-Dialogeinheit übertragenen Meldung in der Lage ist, die Übertragung dieser Meldung am Ende dieser Transaktionsschweigezone zu wiederholen,
und daß die Stations-Steuermittel nach einer vorbestimmten Anzahl von Wiederholungen in der Lage sind, die Stations-Verarbeitungsmittel von ihrem Dialogzustand in ihren Primärzustand übergehen zu lassen.

8. Vorrichtung nach Anspruch 7, dadurch gekennzeichnet, daß die Dauer der Transaktionsschweigezone veränderlich ist und vom operationellen Inhalt der übertragenen Meldung abhängt.

9. Vorrichtung nach einem der Ansprüche 3 bis 8, dadurch gekennzeichnet, daß die Transaktions-, Transaktionsantwort-, Antwort-, Quittungs-, Wähl-, Transaktionsende- und Endquittungsmeldungen (TRA, RTRA, IDi, ACQi, CHi, FNi, ACFi) jeweils ein Endzeichen aufweisen, dessen Wort (CS) eine Information der Gültigkeit der Inhalte der Wörter der vorhergehenden Zeichen enthält, die vorzugsweise gleich dem Wert einer logischen Exklusiv-Oder-Funktion der Inhalte der Wörter der vorhergehenden Zeichen ist.

10. Vorrichtung nach einem der Ansprüche 2 bis 9, dadurch gekennzeichnet, daß jedes Wort eines Zeichens, das eine Anzahl von Bits von gleich null hat, die größer als eine vorbestimmte Schwelle ist, vor seiner Übertragung auf zwei ergänzt wird, und zwar mindestens dann, wenn dieses Zeichen dazu bestimmt ist, von dem tragbaren Objekt zur Station übertragen zu werden,
und daß der Wert des Paritätsbits (bp) ein Abbild dieser ggf. vorgenommenen Ergänzung ist.

11. Vorrichtung nach einem der vorhergehenden Ansprüche, dadurch gekennzeichnet, daß die Objekt-Verarbeitungsmittel im Transaktionskommunikationsmodus in der Lage sind, im Fall des Empfangs einer fehlerhaften Transaktionsmeldung und/oder im Fall einer einen gewählten Wert überschreitenden Zeit zwischen zwei Zeichen der empfangenen Transaktionsmeldung zur Stations-Dialogeinheit eine Fehlermeldung zu übertragen.

12. Vorrichtung nach einem der vorhergehenden Ansprüche, dadurch gekennzeichnet, daß die Objekt-Dialogeinheit Erfassungsmittel aufweist, die in der Lage sind, eine das Vorhandensein der Dialogeinheit im genannten Reichweitenbereich betreffende Angabe zu liefern,
daß die Objekt-Dialogeinheit einen mit den Erfassungsmitteln verbundenen Speicher zum Speichern dieser Angabe besitzt
und daß die Objekt-Steuermittel in der Lage sind, den Inhalt dieses Speichers zu Analysezeitpunkten einer Vielzahl von vorbestimmten Analyseperioden sequenziell zu analysieren.

13. Vorrichtung nach Anspruch 12, dadurch gekennzeichnet, daß die Objekt-Dialogeinheit einen Ruhezustand besitzt,
daß die erste Analyseperiode das Warten auf ein von der Stations-Dialogeinheit kommendes Zeichen ist,
und daß die Objekt-Steuermittel in dem Fall, in dem diese Analyse ein Vorhandensein der Objekt-Dialogeinheit außerhalb dieses Reichweitenbereichs während einer ersten vorbestimmten Anzahl von aufeinanderfolgenden Analysezeitpunkten im Lauf dieser ersten Analyseperiode darstellt, in der Lage sind, die Objekt-Verarbeitungsmittel von ihrem aktiven Zustand in ihren Ruhestand übergehen zu lassen.

14. Vorrichtung nach einem der Ansprüche 12 und 13, dadurch gekennzeichnet, daß eine zweite Analyseperiode zu einem Anfangsanalysezeitpunkt nach der Übertragung der Endquittungsmeldung (ACFi) beginnt, bis diese Analyse ein Vorhandensein der Objekt-Dialogeinheit außerhalb dieses Reichweitenbereichs während einer zweiten vorbestimmten Anzahl von aufeinanderfolgenden Analysezeitpunkten, die von einem Bezugsanalysezeitpunkt aus gerechnet werden, ergibt, wobei die Objekt-Steuermittel hierbei in der Lage sind, die Objekt-Verarbeitungsmittel von ihrem aktiven Zustand in ihren Ruhezustand übergehen zu lassen,
und daß dieser Bezugsanalysezeitpunkt zunächst der Anfangsanalysezeitpunkt, dann ggf. der letzte laufende Analysezeitpunkt ist, zu dem diese Angabe ein Vorhandensein der Objekt-Dialogeinheit in diesem Reichweitenbereich darstellt.

15. Vorrichtung nach einem der Ansprüche 12 bis 14, dadurch gekennzeichnet, daß dieser Speicher ein Riegelspeicher ist,
daß eine dritte Analyseperiode vorgesehen ist, wenn die Objekt-Dialogeinheit in ihrem Ruhezustand ist,
daß die Objekt-Steuermittel in der Lage sind, bei Vorhandensein einer Angabe, die bedeutet, daß die Objekt-Dialogeinheit sich in diesem Reichweitenbereich befindet, die Objekt-Dialogeinheit von ihrem Ruhezustand in ihren aktiven Zustand umzuschalten und nach dieser Umschaltung eine vierte Analyseperiode zu initialisieren,
und daß die Objekt-Steuermittel die Objekt-Verarbeitungsmittel erst in dem Fall in ihren Initialisierungszustand übergehen lassen, in dem diese Analyse während einer vierten vorbestimmten Anzahl von aufeinanderfolgenden Zeitpunkten im Lauf dieser vierten Periode keine Angabe des Vorhandenseins der Objekt-Dialogeinheit außerhalb des Reichweitenbereichs ergibt, während die Objekt-Steuermittel im entgegengesetzten Fall die Objekt-Dialogeinheit von ihrem aktiven Zustand in ihren Ruhestand unter Löschung des Inhalts des Riegelspeichers übergehen lassen.

16. Vorrichtung nach einem der vorhergehenden Ansprüche, dadurch gekennzeichnet, daß mindestens eines der tragbaren Objekte spezifische Freigabemittel (MV) aufweist, die in der Lage sind, vom Benutzer betätigt zu werden, um den Datenaustausch mit der Station zuzulassen oder nicht.

17. Tragbares Objekt, das eine Objekt-Dialogeinheit aufweist, die einen Ruhezustand und einen aktiven Zustand besitzt, in dem sie in der Lage ist mit einer Station innerhalb eines durch diese Station abgegrenzten Reichweitenbereichs zur Durchführung eines Datenaustausches mit dieser Station auf Distanz zusammenzuwirken, wobei die Objekt-Dialogeinheit folgende Mittel aufweist:
- Objekt-Verarbeitungsmittel, die in diesem aktiven Zustand folgendes besitzen:
* einen Zustand, in dem sie bei Empfang einer Abfragemeldung, die von der Station übertragen wird und auf die eine Schweigezone folgt, in der Lage sind,
. eine für die Station bestimmte vorbestimmte Antwortmel dung zu generieren und
. im Fall des Empfangs einer von der Station übertragenen Wählmeldung nach der Generierung dieser Antwortmeldung eine Quittungsmeldung zu generieren, und
* einen Zustand der Transaktionskommunikation mit der Stations-Dialogeinheit, und
- Objekt-Steuermittel, die in der Lage sind, die Objekt-Verarbeitungsmittel in den Transaktionskommunikationszustand übergehen zu lassen,
dadurch gekennzeichnet, daß die Objekt-Verarbeitungsmittel einen Initialisierungszustand besitzen, in dem sie in der Lage sind, aleatorisch eines der nicht aneinandergrenzenden Zeitintervalle dieser Schweigezone zu wählen und innerhalb dieses gewählten Zeitintervalls die vorbestimmte Antwortmeldung zu generieren,
und daß die Objekt-Vearbeitungsmittel im Fall des Fehlens eines Empfangs einer anderen Abfragemeldung nach der Übertragung der Quittungsmeldung von ihrem Initialisierungszustand in den Transaktionskommunikationszustand übergehen.

18. Tragbares Objekt nach Anspruch 17 in Kombination mit einem der Ansprüche 2 bis 6 und 9 bis 15.

19. Zu der Vorrichtung nach einem der Ansprüche 1 bis 16 gehörende Station.

## Claims

1. Device for the remote exchange of information between a station and one or more portable objects, comprising, at the station, a station dialogue unit (UDS) capable of delimiting a range (DP), and, at the or each portable object, an object dialogue unit (UDO) having an active state in which it is capable of remote mutual cooperation with the station dialogue unit inside the said range in order to effect the said exchange of information, the station dialogue unit comprising:
- station processing means (MTS) having:
* a primary condition (CPR) in which they are capable
a) of generating an interrogation message (INQ) within the said range, followed by a silence zone (TINQ);
b) of analysing the content of the said silence zone; and
c) if the content obtained is identified as a predetermined response message (IDi) associated with a single portable object, of generating a selection message (CHi) for the said portable object, and, if not, of repeating operations a) and b) at the end of the said silence zone (TINQ); and
* a condition of dialogue (CDI) with the selected portable object and
- station control means capable of selecting the different conditions of the station processing means as a function of predetermined station control criteria, the or each object dialogue unit comprising object processing means (MTO) having, in the said active state,
* a condition in which they are capable, on receiving the said interrogation message (INQ),
e) of generating the said predetermined response message (IDi) associated with the object; and
f) of generating an acknowledgement message (ACQi) if the said selection message (CHi) has been received; and
* a condition of transactional communication (CTR) with the station dialogue unit, and also
- object control means (MCO) capable of causing the object processing means to pass to the transactional communication condition,
characterised in that,
in the primary condition (CPR), the station processing means (MTS) are capable of analysing selectively the respective contents of a plurality of discrete time intervals (IT1-IT4) of the said silence zone (TINQ);
in that the object processing means (MTO) have an initialising condition (CIN) in which they are capable of choosing at random one of the said time intervals and generating the predetermined response message (IDi) inside the time interval selected;
and in that the object processing means (MTO) pass from their initialisation condition (CIN) to the transactional communication condition (CTR) if no other interrogation message is received after the transmission of the acknowledgement message (ACQi).

2. Device according to Claim 1, characterised in that the exchange of information is effected asynchronously by characters each comprising a start bit (bs), then a word (MT) having a predetermined number of data bits, in principle an octet, followed by a parity bit (bp) and an end bit (bf).

3. Device according to either of Claims 1 and 2, characterised in that, in the said conditions of dialogue and transactional communication, the station dialogue unit is capable of transmitting an end-of-transaction message (FNi) while the object dialogue unit is capable of transmitting a final acknowledgement message (ACFi) in response to that end-of-transaction message.

4. Device according to Claim 3, characterised in that each of the said response (IDi), acknowledgement (ACQi), selection (CHi), end-of-transaction (FNi) and final acknowledgement (ACFi) messages comprises a head character specific to the message, and a predetermined number of identification characters associated in biunique manner with the portable object.

5. Device according to any one of the preceding claims, characterised in that, in the dialogue and transactional communication conditions, the exchange of information comprises the exchange of transactional messages (TRA) each comprising a control character followed by data characters,
in that the word of the control character comprises a bit (c) representing the first transmission of the transactional message or its possible repetition, a bit (o/r) indicating the origin of that message, and also a predetermined number of bits indicating the number of data characters of the message.

6. Device according to Claim 5, characterised in that the word of the first data character of a transactional message transmitted from the station to the portable object comprises an indication representing a type of operation to be effected by the portable object,
in that the number of data characters and/or their respective content depend(s) on the said indication,
and in that the object dialogue unit is capable, in response to such a transactional message, of transmitting to the station a response transactional message, of which the word of the first data character comprises a response indication representing the execution of the operation.

7. Device according to either of Claims 5 and 6, characterised in that, in the said dialogue condition, each message transmitted by the station dialogue unit is followed by a transactional silence zone (ZTRO) in the course of which the station processing means are capable of analysing the response transmitted by the object dialogue unit,
in that, in the absence of a response or if an erroneous response is received by the object dialogue unit, taking into account the content of the message transmitted by the station dialogue unit, the latter is capable of repeating the transmission of the said message at the end of the said transactional silence zone,
and in that, after a predetermined number of repetitions, the station control means are capable of causing the station processing means to pass from their dialogue condition to their primary condition.

8. Device according to Claim 7, characterised in that the duration of the transactional silence zone is variable and depends on the operating content of the message transmitted.

9. Device according to any one of Claims 3 to 8, characterised in that each of the transactional (TRA), transactional response (RTRA), response (IDi), acknowledgement (ACQi), selection (CHi), end-of-transaction (FNi) and final acknowledgement (ACFi) messages comprises a final character, the word (CS) of which contains a piece of data validating the content of the words of the preceding characters, preferably equal to the value of an EXCLUSIVE OR logic function of the content of the words of the preceding characters.

10. Device according to any one of Claims 2 to 9, characterised in that each word of a character of which the number of zero bits is greater than a predetermined threshold is subjected to the two's-complement operation before its transmission, at least when the said character is to be transmitted from the portable object to the station
and in that the value of the parity bit (bp) represents this possible operation.

11. Device according to any one of the preceding claims, characterised in that, in the transactional communication mode, the object processing means are capable of transmitting an error message to the station dialogue unit if an erroneous transactional message is received and/or if the period separating two characters of the received transactional message is greater than a selected value.

12. Device according to any one of the preceding claims, characterised in that the object dialogue unit comprises detection means capable of supplying an indication relating to the presence of the dialogue unit within the said range,
in that the object dialogue unit comprises a memory connected to the detection means for storing the said indication,
and in that the object control means are capable of analysing sequentially the contents of the said memory at analysis instants of a plurality of predetermined analysis periods.

13. Device according to Claim 12, characterised in that the object dialogue unit has a rest state,
in that a first analysis period is the period of waiting for a character originating from the station dialogue unit,
and in that, if that analysis represents the presence of the object dialogue unit outside the said range during a first predetermined number of successive analysis instants in the course of that first analysis period, the object control means are capable of causing the object processing means to pass from their active state to their rest state.

14. Device according to either of Claims 12 and 13, characterised in that a second analysis period commences from an initial analysis instant which occurs after the transmission of the final acknowledgement message (ACFi) until the said analysis reveals the presence of the object dialogue unit outside the said range for a second predetermined number of successive analysis instants counted from a reference analysis instant, the object control means then being capable of causing the object processing means to pass from their active state to their rest state,
and in that the said reference analysis instant is first of all the initial analysis instant and then, where appropriate, the most recent analysis instant for which the said indication represents the presence of the object dialogue unit within the said range.

15. Device according to any one of Claims 12 to 14, characterised in that the said memory is a latch memory,
in that a third analysis period is provided when the object dialogue unit is in its rest state,
in that the object control means are capable of switching the object dialogue unit from its rest state to its active state in the presence of an indication signifying that the object dialogue unit is within the said range, and of initialising a fourth analysis period after that switching operation,
and in that the object control means cause the object processing means to pass to their initialisation condition only if the said analysis reveals, during a fourth predetermined number of successive instants in the course of that fourth period, no indication of the presence of the object dialogue unit outside the range, whereas, in the opposite case, the object control means cause the object dialogue unit to pass from its active state to its rest state, erasing the contents of the latch memory.

16. Device according to any one of the preceding claims, characterised in that at least one of the portable objects comprises specific validation means (MV) that can be controlled by the user in order to authorise or not the exchange of information with the station.

17. Portable object comprising an object dialogue unit having a rest state and an active state in which it is capable of cooperating remotely with a station inside a range delimited by the said station, in order to effect an exchange of information with the said station, the object dialogue unit comprising:
- object processing means which have, in the said active state,
* a condition in which, on receiving an interrogation message transmitted by the station and followed by a silence zone, they are capable
. of generating a predetermined response message for the station, and
. of generating an acknowledgement message if, after the generation of the said response message, a selection message transmitted by the station is received, and
* a condition of transactional communication with the station dialogue unit, and
- object control means capable of causing the object processing means to pass to the transactional communication condition,
characterised in that the object processing means have an initialisation condition in which they are capable of choosing at random one of the discrete time intervals of the said silence zone and of generating the predetermined response message inside the time interval selected,
and in that the object processing means pass from their initialisation condition to the transactional communication condition if no other interrogation message is received after the transmission of the acknowledgement message.

18. Portable object according to Claim 17 taken in combination with any one of Claims 2 to 6 and 9 to 15.

19. Station belonging to the device according to any one of Claims 1 to 16.
